# EUROPÄISCHE PATENTANMELDUNG

(11) **EP 1 393 947 A1**
(43) Veröffentlichungstag der Anmeldung: **03.03.2004**
(21) Anmeldenummer: 03013856.4
(22) Anmeldetag: 18.06.2003
(51) Int. Cl.: B60J 7/06, B60P 7/04

(54) **Abdeckung für den Laderaum eines Fahrzeugs sowie Fahrzeug mit einer Abdeckung**

(30) Priorität: 27.08.2002 DE 10240037
(71) Anmelder: Webasto Vehicle Systems International GmbH, 82131 Stockdorf (DE)
(72) Erfinder: De Gaillard, Francois, 85390 Mouilleron en Pareds (FR); Kölbl, Michael, 82061 Neuried (DE); Mitterbauer, Peter, 4810 Gmunden (AT); Pollak, Martin, 82178 Puchheim (DE); Rudolph, Thomas, 82229 Hechendorf (DE)
(74) Vertreter: Bedenbecker, Markus

(57) **Zusammenfassung**

Die Erfindung betrift eine Abdeckung für die Ladefläche (3) eines Fahrzeugs (1), insbesondere für die Ladefläche (3) eines Pick-Up-Fahrzeugs, wobei ein Rolloelement (2) vorgesehen ist, welches zum Beladen der Ladefläche (3) geöffnet und bei gewünschter Abdeckung der Ladefläche (3) teilweise oder vollständig geschlossen werden kann und wobei das Rolloelement (2) miteinander verbundene und nach außen gewölbte Lamellen (4) aufweist.

## Beschreibung

Die Erfindung betrifft eine Abdeckung für den Laderaum eines Fahrzeugs.

Als Stand der Technik ist aus der US 4,792,178 ein Fahrzeug mit einer ausziehbaren Laderaumabdeckung aus einem Gewebematerial (z.B. aus Vinyl) bekannt. Eine derartige Abdeckung kann nur in geringem Maße äußeren Belastungskräften ausgesetzt werden.

Der Erfindung liegt die Aufgabe zugrunde, eine besonders belastbare Abdeckung für den Laderaum eines Fahrtzeugs anzubieten.

Die erfindungsgemäße Abdeckung für die Ladefläche eines Fahrzeugs, insbesondere für die Ladefläche eines Pick-Up-Fahrzeugs besitzt ein Rolloelement, welches zum Beladen der Ladefläche geöffnet und bei gewünschter Abdeckung der Ladefläche teilweise oder vollständig geschlossen werden kann. Das Rolloelement besteht dabei aus miteinander verbundenen und im geschlossenen Zustand zumindest bereichsweise nach außen gewölbten (insbesondere teil-elastischen) Lamellen. Durch die Verwendung der Lamellen wird die Abdeckung besonders stabil und kann auch äußeren Belastungskräften ausgesetzt werden. Die nach außen vorgenommene Wölbung der Lamellen bewirkt gleichzeitig einen Wasserabfluß, so daß keine zusätzlichen Belastungskräfte auf die geschlossene Abdeckung durch angesammelte Wassermengen auftreten können.

Vorteilhafterweise ist das Rolloelement im aufgerollten Zustand im Bereich der Fahrgastzelle des Fahrzeugs, insbesondere des Pick-Up-Fahrzeugs, angeordnet. Hierdurch kann das Fahrzeug von der Rückseite beladen werden, wenn die Ladefläche geöffnet und das Rolloelement aufgerollt ist.

Nach einer vorteilhaften Ausführungsform kann das Rolloelement insbesondere im hinteren Bereich der Abdeckung im wesentlichen senkrecht nach unten verlaufen und somit als Hecktüre (z.B. des hinteren Ladeflächebereichs eines Pick-Up-Fahrzeugs) dienen. Zum besseren Auf-/Abrollen kann dabei das Rolloelement insbesondere im hinteren Bereich nicht oder nur minimal gewölbt ausgebildet sein.

Zur Verbesserung der seitlichen Führung kann das Rolloelement beidseitig in Führungselementen mit Vertiefungen geführt sein. Die beidseitigen Randbereiche des Rolloelements sind dabei in den Vertiefungen umfassend aufgenommen und paßgenau geführt.

Die Führungselemente können Kontaktelemente aufweisen, welche das Rolloelement von der Unterseite mit Druck beaufschlagen und ggf. auch die nach außen verlaufende Wölbung der Rolloelemente herbeiführen oder zumindest unterstützen.

Hierzu können die Kontaktelemente federnd ausgebildet sein. Die Kontaktelemente können geglättete und reibgünstige Oberflächen aufweisen welche eine Relativbewegung des beim Öffnen oder Schließen auf den Kontaktelementen abrollenden oder abrutschenden Rolloelements erleichtern.

Nach einer vorteilhaften Ausführungsform können die Führungselemente des Rolloelements auch eine Wasserablaufrinne aufweisen. Durch die nach außen verlaufende Wölbung der Führungselemente fließt auftreffendes Wasser (z.B. Regenwasser) seitlich ab und wird in den Wasserablaufrinnen der Führungselemente abgeführt. Zur Abführung des Wassers aus den Wasserablaufrinnen können diese seitliche Wasserabflussöffnungen aufweisen. Zur Verbesserung des Wasserablaufs kann die Wasserablaufrinne auch geneigt sein.

Ein Fahrzeug mit einer erfindungsgemäßen Abdeckung besitzt eine im ausgezogenen Zustand besonders stabil ausgeführte Abdeckung aus einem Rolloelement, welches nach außen gewölbte elastische Lamellen besitzt, wodurch auftreffendes Regenwasser leicht ablaufen kann.

Das aus einer stabilen Lamellenstruktur bestehende Rolloelement kann trotz der Teil-Elastizität (Elastizität in begrenztem Umfang) der Lamellen auch äußeren Belastungskräften ausgesetzt werden und die unter dem Rolloelement angebrachten Waren hierdurch vor äußeren Einflüssen schützen.

Die Erfindung ist anhand von Ausführungsbeispielen in den Zeichnungsfiguren näher erläutert. Es zeigen:
- Fig. 1: ein Fahrzeug mit einer rückseitigen Abdeckung im ausgefahrenen Zustand,
- Fig. 2: ein Fahrzeug nach Fig. 1 mit einer Abdeckung im eingerollten Zustand,
- Fig. 3: ein Schnitt A durch eine Abdeckung nach Fig. 1 sowie
- Fig. 4: eine Detaildarstellung eines Kontaktelements für eine Abdeckung nach Fig. 3.

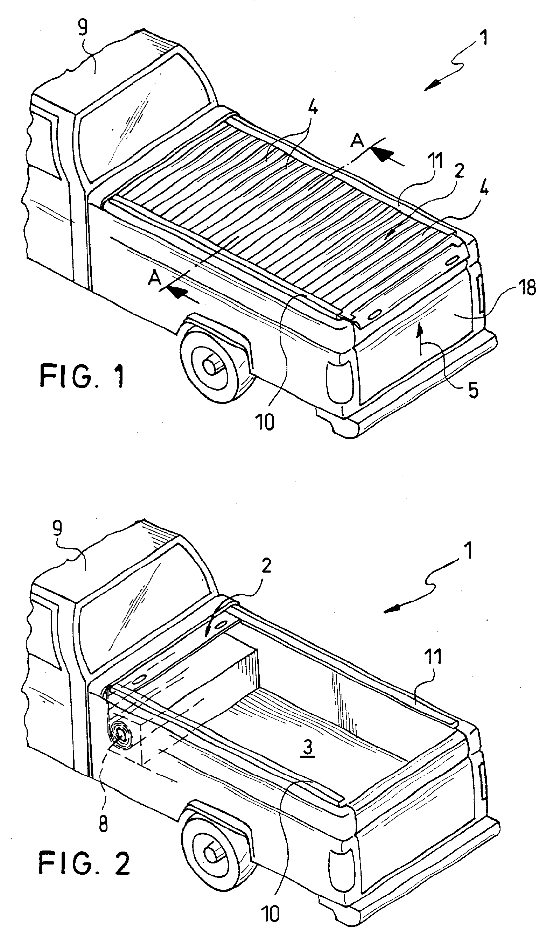

Fig. 1 zeigt ein Fahrzeug 1 mit einem Rolloelement 2 als Abdeckung für die Ladefläche 3. Das Rolloelement 2 ist geschlossen und besteht aus miteinender verbundenen Lamellen 4, welche in Richtung 5 nach außen gewölbt sind, so daß die mittleren Bereiche 6 der Lamellen 4 erhöht gegenüber den Randbereichen 7 angeordnet sind. Hierdurch kann auf die Lamellen auftreffendes Wasser (z.B. Regenwasser) in die Randbereiche 7 der Lamellen 4 abgeleitet werden. Das Rolloelement 2 kann auch in den senkrechten Bereich der Hecktür 18 übergehen und als Ersatz für eine Hecktür 18 dienen (nicht abgebildet).

Fig. 2 zeigt ein Fahrzeug 1 mit geöffnetem Rolloelement 2. Das Rolloelement 2 ist dabei in einer gestrichelt angedeuteten Rolle 8 hinter der Fahrgastzelle 9 des Fahrzeugs 1 aufgerollt. Das Rolloelement 2 ist in den Darstellungen nach Fig. 1 und 2 in seitlichen Führungselementen 10, 11 form- und/oder reibschlüssig aufgenommen.

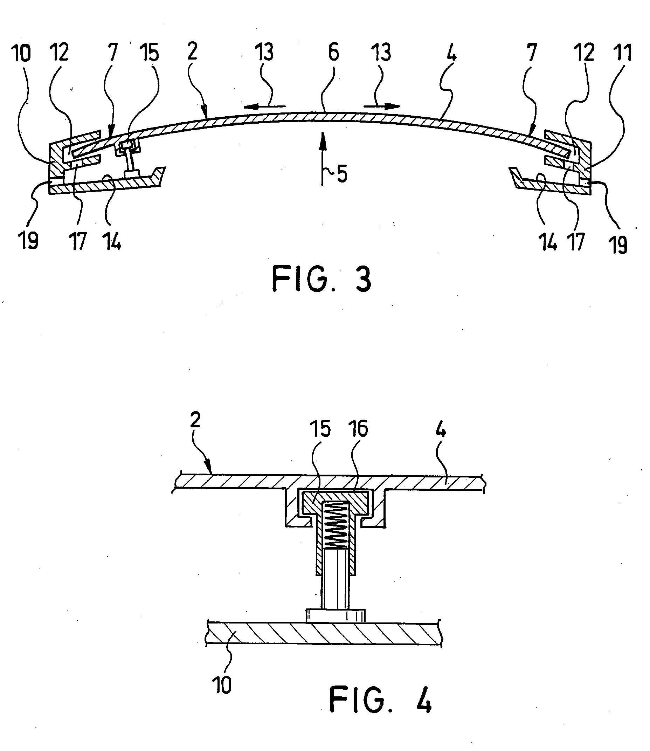

Aus dem Schnitt A gemäß Fig. 1 geht aus Fig. 3 die Aufnahme der Lamellen 4 des Rolloelements 2 in den Führungselementen 10, 11 hervor. Die Führungselemente 10, 11 besitzen hierzu in Längsrichtung des geschlossenen Rolloelements 2 verlaufende Vertiefungen 12, in welchen die Randbereiche 7 der Lamellen 4 aufgenommen sind. Dabei sind die Lamellen 4 in Richtung 5 nach oben gebogen und nach außen gewölbt. Etwaiges Regenwasser fließt damit in Richtung 13 hin zu den Führungselementen 10, 11 ab und kann durch die dort eingeformte Wasserablaufrinne 14, die vorteilhafterweise in Längsrichtung des geschlossenen Rolloelements 2 geneigt ist, ablaufen. Die Wasserablaufrinne 14 kann durch Öffnungen 17 mit den Vertiefungen 12 verbunden sein. Anschlissend kann das in der Wasserablaufrinne gesammeltes Wasser durch seitlichen Wasserabflussöffnungen 19 ablaufen.

Das Rolloelement 2 wird nach Fig. 4 in einem oder beiden Führungselementen 10,11 von seiner Unterseite über Kontaktelemente 15 (z.B. federnde Stifte) druckbeaufschlagt. Diese Kontaktstifte 15 dienen dazu, die Lamellen 4 in Richtung 5 zu wölben oder die vorhandene Wölbung der Lamellen 4 zu unterstützen. An ihrer Oberseite 16 besitzen die Kontaktelemente 15 entweder Rollen oder ein geglättetes und reibgünstiges Material, um ein Abrollen oder Abrutschen der Rolloelemente 2 und deren Lamellen 4 beim Öffnen und Schließen der Abdeckung zu erleichtern.

### Bezugszeichen

- 1: Fahrzeug
- 2: Rolloelement
- 3: Ladefläche
- 4: Lamelle
- 5: Richtung
- 6: mittlerer Bereich
- 7: Randbereich
- 8: Rolle
- 9: Fahrgastzelle
- 10: Führungselement
- 11: Führungselement
- 12: Vertiefung
- 13: Richtung
- 14: Wasserablaufrinne
- 15: Kontaktelement
- 16: Oberseite
- 17: Öffnung
- 18: Hecktür
- 19.: Wasserabflussöffnungen

## Patentansprüche

1. Abdeckung für die Ladefläche (3) eines Fahrzeugs (1), insbesondere für die Ladefläche (3) eines Pick-Up-Fahrzeugs, wobei ein Rolloelement (2) vorgesehen ist, welches zum Beladen der Ladefläche (3) geöffnet und bei gewünschter Abdeckung der Ladefläche (3) teilweise oder vollständig geschlossen werden kann und wobei das Rolloelement (2) miteinander verbundene und nach außen gewölbte Lamellen (4) aufweist.

2. Abdeckung nach Anspruch 1, wobei das Rolloelement (2) im aufgerollten Zustand im Bereich der Fahrgastzelle (9) des Fahrzeugs (1) angeordnet ist.

3. Abdeckung nach Anspruch 1 oder 2, wobei das Rolloelement (2) insbesondere im hinteren Bereich der Abdeckung im wesentlichen senkrecht nach unten verläuft.

4. Abdeckung nach Anspruch 3, wobei das Rolloelement (2) im hinteren Bereich als senkrechte Ladetür dient.

5. Abdeckung nach einem der vorhergehenden Ansprüche, wobei das Rolloelement (2) beidseitig in Führungselementen (10,11) mit Vertiefungen (12) geführt ist.

6. Abdeckung nach einem der vorhergehenden Ansprüche, wobei die Führungselemente (10,11) Kontaktelemente (15) aufweisen, welche das Rolloelement (2) von der Unterseite mit Druck beaufschlagen.

7. Abdeckung nach Anspruch 6, wobei die Kontaktelemente (15) federnd ausgebildet ist.

8. Abdeckung nach einem der vorhergehenden Ansprüche, wobei die Führungselemente (10,11) eine Wasserablaufrinne (14) aufweisen.

9. Abdeckung nach Anspruch 8, wobei die Wasserablaufrinne (14) seitliche Wasserabflußöffnungen aufweist.

10. Abdeckung nach Anspruch 8 oder 9, wobei die Wasserablaufrinne (14) zum Wasserablauf geneigt ist.
